# EUROPEAN PATENT APPLICATION

(11) **EP 2 339 542 A1**
(43) Date of publication of application: **29.06.2011**
(21) Application number: 09306319.6
(22) Date of filing: 23.12.2009
(51) Int. Cl.: G06T 19/00, G06T 15/00

(54) **Method, system and computer program for displaying and interactively exploring a tubular object**

(71) Applicant: Intrasense, 34000 Montpellier (FR)
(72) Inventor: Moulis, Marc, 34770 GIGEAN (FR)
(74) Representative: Pontet, Bernard

(57) **Abstract**

The invention relates to a method for displaying and interactively exploring a tubular object with an apparatus comprising a central memory, a graphics processing unit (GPU), a video memory, said tubular object being represented as a set of three dimensional slices (104) transverse to the biggest dimension (Z).

The method defines a circular buffer using a three dimensional texture. Only a limited number of slices, located around the camera position is uploaded to the circular buffer. When the camera position changes in one direction, the circular buffer is updated so that only the farthest slices in the same direction get uploaded to the video memory.

The invention also relates to a system and a computer program implementing such a method.

## Description

The present invention relates to a method for displaying and interactively exploring a tubular object. It also relates to a computer program and system implementing such a method.

The field of the invention is the displaying and the exploration of a three dimensional object, more particularly a three dimensional tubular object such as colon and vessels for virtual endoscopy of the colon or for virtual vessel investigation in the medical domain.

In the medical domain, exams of the colon or the vessel are usually made with apparatus such as endoscope. The exam data usually come as a series of slices, each of them having a given thickness and a 3D position, and thus representing a piece of the exam's volume.

The known displaying and virtual exploration methods and systems implement an apparatus comprising a central memory, a graphics processing unit (GPU) and a video memory also called GPU memory. But, the exam data is generally larger than the video memory and the processing of such exam data can not be done efficiently by the GPU.

Some known techniques implement an adaptation of the exam data to the video memory capacities or the GPU capacities by decreasing the quantity of the exam data. But such techniques lead to an important degradation of the quality of visual display and virtual exploration of the tubular object.

Some other techniques, store the whole exam data in a central memory or use additional video memory. The data processing, i.e. the data rendering, is done by the GPU and a central processing unit (CPU). Such techniques keep a quality of displaying satisfactory but lead to a load of the CPU. Moreover, such techniques need extra central memory use and doesn't provide a smooth navigation in the tubular structure and the production of three dimensional objects at interactive rates.

It is an object of the present invention to remedy these drawbacks.

It is an object of the present invention to provide method, system and computer program for displaying and interactively exploring a tubular object at interactive rates without or with a little degradation.

It is another object of the present invention to provide method, system and computer program for displaying and interactively exploring a tubular object avoiding extra memory use or CPU load.

It is another object of the present invention to provide a method, system and computer program for displaying and interactively exploring a tubular object allowing a smooth navigation inside the tubular object.

The invention is disclosed as recited in the appended claims.

Such objects are accomplished through a method for displaying and interactively exploring a tubular object with an apparatus comprising a central memory, a graphics processing unit (GPU), a video memory, said tubular object being represented as a set of three dimensional slices transverse to the biggest dimension of the tubular object, each slice being represented by three dimensional data previously acquired, said method comprising:
a phase of initialization comprising the following steps:
   - loading three dimensional data for all of the slices of said set of slices in said central memory,
   - defining a circular buffer based on three dimensional texture in said video memory ;
   - loading three dimensional data for a subset of slices within said set of slices from said central memory to said circular buffer according to a predetermined point of observation, said subset of slices representing only a part of said tubular object located around said point of observation according to its biggest dimension;
   - displaying at least a part of the slices located in front of the observation point, among the subset of slices stored in said circular buffer and ,
a phase of exploration comprising at least one iteration of the following steps:
   - when said point of observation changes along said biggest dimension of said tubular object, updating said circular buffer by uploading three dimensional data according to at least one new slice from said central memory to said circular buffer,
   - displaying at least a part of the slices in front of the new observation point among those stored in said updated circular buffer.

The method according to the invention makes it possible to display and virtually explore a three dimensional object at interactive rates, with smooth navigation and without or with a little data degradation.

Indeed, the method according to the invention uses a circular buffer, in which a limited number of slices located around the observation point are stored as a group of three dimensional texture. Thanks to such a circular buffer, the method according to the invention limits data processing to be done by the GPU to a limited number of slices and the GPU can then realize all the rendering operations avoiding any CPU load. The exploration is smooth and realized at interactive rates because slices around the observation point are already present in the circular buffer, the latter being updated when the observation point changes.

According to the invention, the circular buffer may be updated so that the number of the slices stored in the circular buffer is constant

More particularly, the circular buffer may be updated so that, for each point of observation, the number of slices in front of the observation point is constant and the number of the slices behind the observation point is constant.

According to an advantageous feature of the invention, the circular buffer may be updated so that, for each observation point, the circular buffer comprises the same number of slices in front of and behind the observation point. In this way, the area around the observation point in equally covered and the exploration of the tubular structure in both directions may be done with the same interactivity and smoothness.

Advantageously, when the observation point moves of a number of slices in a given direction along the biggest dimension, the circular buffer is updated by uploading from the central memory to the circular buffer, said number of slices:
- located in the same direction, and
- closest to the furthest slice already present in the circular buffer in said direction;
and storing said slices at the locations of the furthest slices, in the opposite direction, in said circular buffer.

In this way, when the observation point moves of "x" slices forward or backward, the updating of the circular buffer is updated of "x" slices only. In other words only "x" locations are updated in the circular buffer. Indeed, according to the observation point, only the furthest slices are loaded from the central memory to the circular buffer. The other slices, i.e. the other location of the circular buffer, remain unchanged.

The method according to the invention may also comprise a step for blending at least two slices together before storing said slices into the circular buffer, said blending step comprising a recombination of at least two slices. Such a combination may be done to increase the viewing distance when the thickness of the slices is too small.

Such a blending may be done using standard average blending, in order to limit the quality loss.

The number of the slices to be recombined is chosen by the user.

The method according to the invention may comprise a step interrogating the user to choose the number of slices to be recombined.

The method according to the invention may also comprise a rendering step before a slice is loaded from the central memory to the circular buffer. Such a rendering operation if done by the GPU only and does not need any external resource such as a CPU.

Advantageously, the duration of the rendering step may be monitored so as to carry a further step of reducing the resolution of the displayed image when said rendering duration exceeds a threshold related to the speed of displaying the new slice.

Such a feature enforces the interactivity during the virtual exploration of the object, especially when the rendering process is too slow for real time interactive displaying.

According to an advantageous feature of the invention, the rendering step uses a ray casting process comprising a surface detection by comparing density level of sampled points on said ray with a determined density threshold level, said rendering step further comprising a heightened frequency of the sampled points when their density approach said threshold level nearer than a determined value.

The increase of the sampling frequency according to this feature of the invention enforces visual quality and precision of the displaying.

To further enhance the visual quality, the surface location on at least one casted ray may be defined by an interpolation between the two last steps of the recursive loop of the ray casting process, thus enablig more precise and true determination of the surface position.

The method according to the invention may also comprise, before or within the initialization phase, a step for formatting of data representing each slice, said homogenizing step providing:
- the same thickness to each slice,
- no gaps and overlaps between all slices representing the tubular object, and
- same dimension for each voxel.

The method may also comprise a step for optimizing three dimensional texture in order to maximize the number of slices stored in said texture along the biggest dimension of the tubular object, said optimization step comprising a step for adapting said texture to the width and the height of the slices.

Such an optimizing may be done when the exam's width and height are too large to be stored inside the 3D texture.

The optimization step may comprise a step for re-sampling the width and the height of the slices for appropriate dimensions for the three dimensional (3D) texture, when said width and height are to large to be stored in said texture.

To avoid or limit quality degradation, the re-sampling of the slices may comprise trilinear filtering of the slices. Such a trilinear filtering usually lead to very little degradation.

The method according to the invention is particularly adapted for virtual endoscopy of the colon or for virtual vessel investigation.

The present invention also provides a computer program comprising instructions for carrying out the steps of the method according the present invention, when said computer program is executed on a computer system.

The invention also system comprising means adapted to carry on the steps of the method according to invention.

The new and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
- figure 1 diagrammatically illustrates the steps of a method according to the invention;
- figure 2 diagrammatically illustrates the steps of a a 3D rendering process used in the method 100 represented on figure 1 ;
- figure 3 schematically illustrates slice recombination according to the present invention;
- figure 4 is an image taken during virtual colon endoscopy according to the present invention; and
- figure 5 is an image taken during virtual vessel exploration according to the present invention;

In the following specifications, elements common to several figures are referenced through a common identifier.

The invention is particularly adapted for, but not limited to, virtual colon endoscopy or virtual vessel investigation.

In the following example, the method and system according to the invention is used for virtual colon endoscopy.

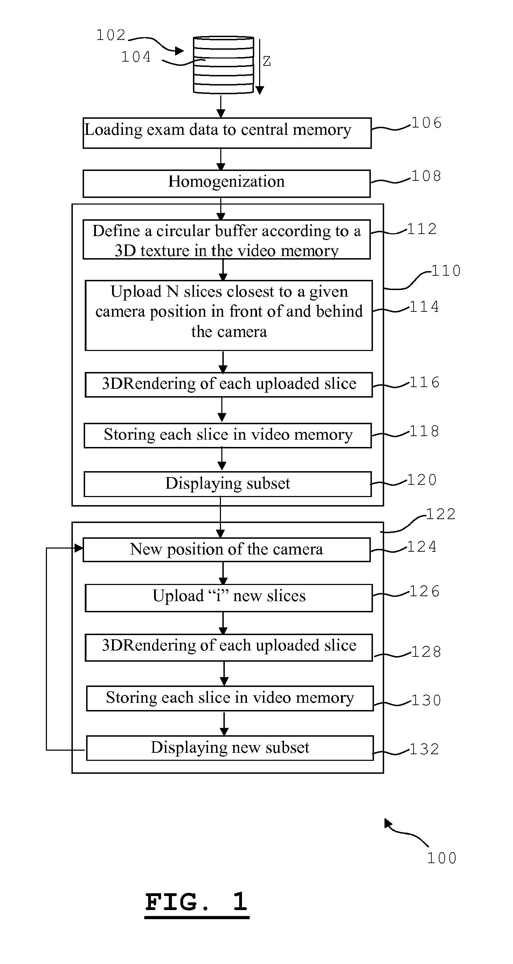

Figure 1 diagrammatically illustrates the steps of a method 100 according to the invention.

The exam data 102 comprising a plurality slices 104 is loaded into central memory at the step 106. Each slice 104 has a given thickness and a 3D position, and thus represents a piece of the exam's volume, i.e. a piece of the colon.

At step 108, the exam data is homogenized. After homogenization all slices 104 have the same thickness, and no gaps or overlaps exist between two consecutive slices. In the present invention exam's voxels do not need to be isotropic (i.e. have the same dimensions along the 3 axis), however it is preferable that all voxels in the exam have the same X, Y and Z dimensions.

If the exam data loaded at step 106 is already homogenized the homogenization step may not be realized.

The method 100 according to the invention the comprises an initialization phase 110 comprising the following steps:
- at step 112 a circular buffer of "N" locations is defined in the video memory associated to the graphics processing unit (GPU) for storing three dimensional textures. The video memory is also called graphics adapter's memory. The number "N" is smaller than the total number of the slices in the exam data. In a non limitative example, the number "N" is equal to 10;
- at step 114 "N" slices closest to a given position of a virtual camera are uploaded from the central memory to the circular buffer;
- at step 116, each of the n slices is 3D rendered. The 3D rendering gets called until all slices in the surrounding area of the camera get uploaded, i.e. the entire 3D texture is filled with slices representing the two half-volumes in front of and behind the camera position;
- at step 118, the image obtained for each slice is stored in the circular buffer defined in the video memory; and
- at step 120 at least a subset of the slices stored in the circular buffer and located in front of the camera are displayed on a display screen.

The method 100 then comprises an exploration phase 122. The exploration phase 122 comprises at least one iteration of the following steps every time the position of the camera changes, i.e. the camera moves forward or backward transverse to the biggest dimension of the colon:
- at step 124, the new position of the camera is determined, i.e. the number "i" of slices the camera has moved and the direction the camera has moved (forward or backward);
- at step 126, "i" new slices are uploaded from the central memory. The new slices uploaded are those:
   ○ located in the same direction as the direction in which the camera has moved, and
   ○ closest to the furthest slice already present in the circular buffer in the same direction;
- at step 128, each of the "i" new slices is 3D rendered. The 3D rendering gets called until all "i" slices get uploaded;
- at step 130, the circular buffer is updated with the image obtained for each of the "i" new slices. The image for the "i" new slices are stored at the locations of the furthest "i" slices in the opposite direction to the camera move direction; and
- at step 132 at least a subset of the slices stored in the circular buffer and located in front of the new camera position are displayed on the display screen.

The 3D texture features are used to store volume data. This texture is stored inside the graphics adapter's memory. However, exams may have more slices than what a graphics accelerator can handle, while exams' width and height usually do not exceed these limits. The method according to the invention comprise may then comprise a step to find the best match to the exam's dimensions along the X and Y axis, and will maximize the number of slices (Z) in the 3D texture. This approach guarantees, in the best case, a 1:1 match between the exam and its representation on the graphics accelerator. Whenever the exam's width and height are too large to be stored inside the 3D texture, slices may be resampled to the appropriate dimensions using trilinear filtering, usually leading to very little degradation.

According to the invention only a small amount of data is to be transferred to the video memory (about 10 slices). This enables interactive rendering rates especially for the initialization phase. The slices to be uploaded are chosen using the following principles:
- slices closer to the camera position have a higher priority;
- selected slices are located in front of and behind the camera, so that if the camera suddenly looks backwards, exam data will be available for visualization immediately in the video memory.

The method according to the present invention uploads an area of slices located "around" the camera position. When the camera moves inside the exam's volume, for example by moving the camera position by only one slice, the present invention treats the 3D texture as a circular buffer along the Z (slices) axis, and uses hardware texture repeating capabilities to access the proper voxel inside the pixel shader. Thus, moving the camera by one slice only leads to an upload of one slice, keeping the rest of the surrounding area "as is". In other words, only the farthest slices get uploaded and seem to appear naturally in the distance when the camera moves smoothly. Technically, the camera is always located at the center of a volume with an equal number of "front" and "back" slices. The viewing distance is thus limited to the number of slices of front and back sides along the Z axis of the 3D texture.

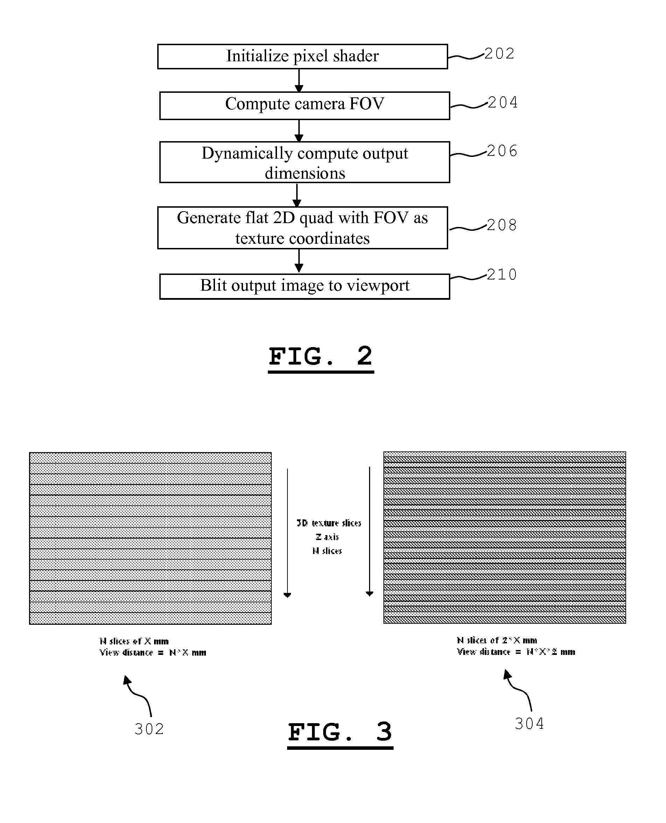

Figure 2 diagrammatically illustrates the steps of a 3D rendering process used in the method 100 represented on figure 1.

The 3D rendering process of a slice comprise a first step 202 of pixel shader initialization.

At step 204 the camera's field of view (FOV) according to a camera position.

At step 206 the output dimensions of the slice are computed.

Then, at step 208, a flat 2D quad is generated with the field of view of the camera as texture coordinates.

The step 210 blits output image to viewport.

This 3D rendering is used in the initialization phase 110 at step 116 and in the exploration phase 122 at step 128.

Advantageously, the rendering process occurs entirely on the GPU, thus any future improvement to the hardware shall directly impact the rendering;

A ray-casting approach best fits to the endoscopy's constraints (tubular structure, closed environments around the camera), where early-loop terminations can occur once a voxel is found, compared to standard VR technologies, thus reducing further rendering times

Once the hardware states are correctly set and the pixel shader initialized, the endoscopic rendering is triggered by drawing a flat 2D quad on-screen. The texture coordinates associated with this quad are retrieved by the pixel shader, and contain the camera FOV for each pixel. This FOV data is used in the shader to generate ray-casting vectors for each pixel.

The endoscopy technology is based on a threshold CT level. For each ray started at the camera position, the pixel shader iterates through the 3D texture representing the exam until it exceeds the visible area, hits a voxel that matches the threshold, or leaves the exam volume. In the case a voxel got hit, a Phong lighting equation and some distance-based fogging are applied, and the final color for the pixel is computed. The method according to the invention also computes a valid depth value for that pixel, so that the hardware depth buffer can be correctly initialized for further standard polygonal rendering.

The GPU ray-casting technology is currently a fillrate limited technology (the "fillrate" being the number of pixels a video card can render). To maintain interactive rates, the rendering time is monitored, and the dimensions of the output image may optionally be reduced to some extents to increase rendering speed. The output image will then be up scaled to the final view port dimensions before being displayed. This degradation is usually acceptable during interactive phases, where smooth visual feedback is the priority.

To improve the visual quality, the method according to the present invention may increase sampling frequency when the density levels in the exam volume approach a threshold level. This enables highly-detailed threshold surface detection, while maintaining GPU loops as light as possible. Also, to further enhance the detected surface's position, the technology interpolates the exact surface location, based on the two last steps in the ray-casting loop.

Figure 3 schematically illustrates slice recombination according to the present invention.

If the Z dimension of the 3D texture, i.e. the biggest dimension of the tubular structure, is very small, for example <=128 slices, and the thickness of the exam' slices is also very small, smaller than 0.6mm for example, the viewing distance along the Z axis can become very low. To overcome this limitation, the present invention comprise a step to blend multiple exam slices together using standard average blending, in order to increase the viewing distance along the Z axis, at the price of a small quality loss. The threshold of recombination is a user preference, and the number of slices to be recombined is automatically computed according to the threshold.

With reference to figure 3, in the case 302 no blending is performed whereas in the 304 the slices are recombined two by two. If the thickness of the slices is "X" mm, the view distance available in the circular buffer in the case 302 is N.X mm, whereas the view distance available in the circular buffer in the case 304 is 2.N.X. So, the view distance is doubled by recombining the slices two by two.

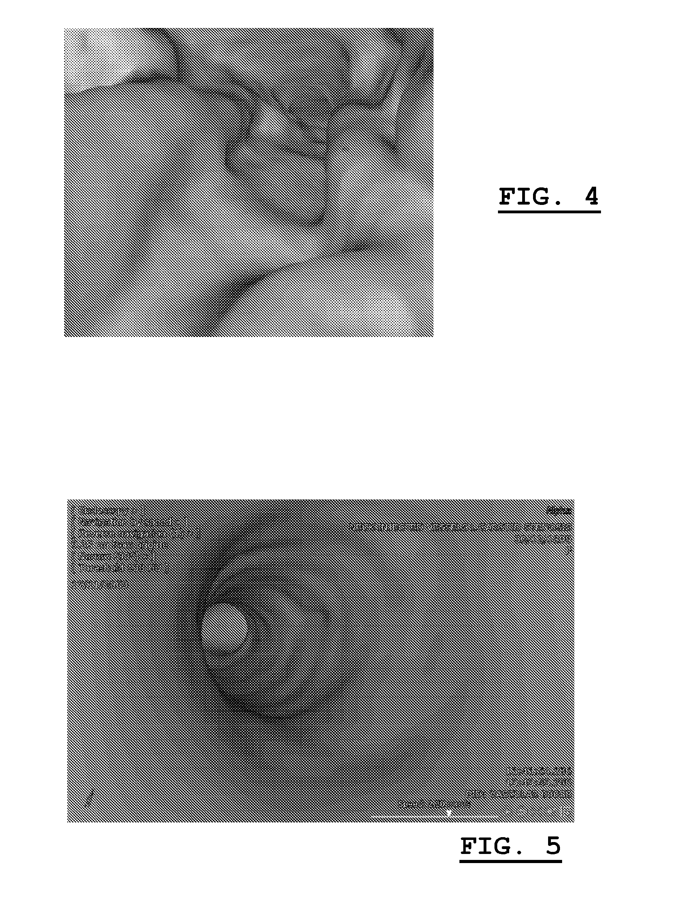

Figure 4 is an image taken during virtual colon endoscopy according to the present invention.

Figure 5 is an image taken during virtual vessel exploration according to the present invention.

The present invention allows the production of 3D images at interactive rates:
- the streaming from central memory to circular buffer in the GPU memory is done in real-time, trough the hardware graphical bus, making the data available for the rendering;
- dynamic output image reduction and hardware implementation contribute to sustain interactive rates without impairing CPU computational power;

The present invention does not imply or at most limits degradations from the original exam data sampling rate:
- the original exam data is directly used whenever the underlying hardware provides the required capabilities;
- slice recombination, Streamed Circular Buffer and Refinement in the GPU ray-casting shader allows high quality rendering of larger than GPU memory Medical Image Datasets.

The present invention avoids CPU load:
- The rendering loop occurs completely inside the GPU;
- Any necessary data is dynamically loaded into the GPU Memory.

The present invention allows free and smooth navigation inside the exam's volume. The rendering can take place at any non-integral position inside the exam's boundary, and look freely in any direction.

The technology avoids extra central memory usage. The only required central memory overhead (apart from the original exam data) is used for a slice buffer.

While the invention has been particularly shown and described mainly with reference to a preferred embodiment, it will be understood that various changes in form and detail may be made therein without departing from the spirit, and scope of the invention.

## Claims

1. Method for displaying and interactively exploring a tubular object with an apparatus comprising a central memory, a graphics processing unit (GPU), a video memory, said tubular object being represented as a set of three dimensional slices (104) transverse to the biggest dimension (Z) of the tubular object, each slice (104) being represented by three dimensional data previously acquired, said method comprising:
a phase (110) of initialization comprising the following steps:
- loading (106) three dimensional data for all of the slices of said set of slices in said central memory,
- defining (112) a circular buffer based on three dimensional texture in said video memory ;
- loading (114) three dimensional data for a subset of slices within said set of slices (102) from said central memory to said circular buffer according to a predetermined point of observation, said subset of slices representing only a part of said tubular object located around said point of observation according to its biggest dimension;
- displaying (120) at least a part of the slices located in front of the observation point, among the subset of slices stored in said circular buffer, and
a phase (122) of exploration comprising at least one iteration of the following steps:
- when said point of observation changes along said biggest dimension (Z) of said tubular object, updating (126) said circular buffer by uploading three dimensional data according to at least one new slice from said central memory to said circular buffer,
- displaying (132) at least a part of the slices in front of the new observation point among those stored in said updated circular buffer.

2. Method according to claim 1, **characterized in that** the circular buffer is updated so that the number (N) of slices stored in the circular buffer is constant.

3. Method according to anyone of the preceding claims, **characterized in that** the circular buffer is updated so that, for each observation point, the number of slices in front of the observation point is constant and the number of the slices behind the observation point is constant.

4. Method according to anyone of the preceding claims, **characterized in that** the circular buffer is updated so that, for each point of observation, the circular buffer comprises the same number of slices in front of and behind the observation point.

5. Method according to anyone of the preceding claims, **characterized in that** when the observation point moves of a number of slices in a given direction along the biggest dimension (Z), the circular buffer is updated by uploading from the central memory to the circular buffer, said number of slices:
- located in the same direction, and
- closest to the furthest slice already present in the circular buffer in said direction;
and storing said slices at the locations of the furthest slices, in the opposite direction, in said circular buffer.

6. Method according to anyone of the preceding claims, **characterized in that** it also comprises a step for blending at least two slices together before storing said slices to the circular buffer, said blending step comprising a recombination of at least two slices.

7. Method according to anyone of the preceding claims, **characterized in that** it also comprises a rendering step (116,128) before a slice is loaded from the central memory to the circular buffer.

8. Method according to the preceding claim, **characterized in that** the duration of the rendering step is monitored so as to carry a further step of reducing the resolution of the displayed image when said rendering duration exceeds a threshold related to the speed of displaying the new slice.

9. Method according to anyone of the claims 7 or 8, **characterized in that** the rendering step uses a ray casting process comprising a surface detection by comparing density level of sampled points on said ray with a determined density threshold level, said rendering step further comprising a heightened frequency of the sampled points when their density approach said threshold level nearer than a determined value.

10. Method according to the claim 9, **characterized in that** the surface location on at least one casted ray is defined by an interpolation between the two last steps of the recursive loop of the ray casting process.

11. Method according to anyone of the preceding claims, **characterized in that** it also comprises, before or within the initialization phase (110), a step (108) for formatting of data representing each slice, said homogenizing step providing:
- the same thickness to each slice (104),
- no gaps and overlaps between all slices (104) representing the tubular object, and
- same dimension for each voxel.

12. Method according to anyone of the preceding claims, **characterized in that** it also comprises, a step for optimizing three dimensional texture in order to maximize the number of slices (104) stored in said texture along the biggest dimension (Z) of the tubular object, said optimization step comprising a step for adapting said texture to the width and the height of the slices (104).

13. Method according to claim 12, **characterized in that** the optimization step also comprises a step for re-sampling the width and the height of the slices for appropriate dimensions for the three dimensional texture, when said width and height are to large to be stored in said texture.

14. Method according to claim 13, **characterized in that** the re-sampling of the slices comprise trilinear filtering of the slices.

15. Use of the method according to anyone of the claims 1 to 10 for virtual endoscopy of the colon or for virtual vessel investigation.

16. Computer program comprising instructions for carrying out the steps of the method according to anyone of the claims 1 to 14, when said computer program is executed on a computer system.

17. System comprising means adapted to carry on the steps of the method according to anyone of claims 1 to 14.
